# FASCICULE DE BREVET EUROPEEN

(11) **EP 1 544 100 B1**
(45) Date de publication et mention de la délivrance du brevet: **30.08.2006**
(21) Numéro de dépôt: 04292844.0
(22) Date de dépôt: 01.12.2004
(51) Int. Cl.: B64C 9/00, B64C 9/02, B64C 9/06, B64C 9/08, B64C 9/10, B64C 9/12, B64C 9/30, B64C 5/00, B64C 5/02, B64C 5/10, B64C 13/00

(54) **Procédé pour la réduction des charges aérodynamiques appliquées aux gouvernes de profondeur d'un aéronef lors d'un décollage**
Verfahren zum Verringern der aerodynamischen Kräfte auf ein Flugzeughöhenruder während des Abhebens
Method for reducing the aerodynamic forces on an elevator of an aircraft during takeoff

(30) Priorité: 19.12.2003 FR 0314951
(43) Date de publication de la demande: 22.06.2005
(73) Titulaire: AIRBUS France, 31060 Toulouse (FR)
(72) Inventeur: Boe, Régis, 31490 Leguevin (FR); Sauvinet, Frédéric, 31170 Tournefeuille (FR)
(74) Mandataire: Bonnetat, Christian

(56) Documents cités:
- US-A- 4 034 334
- US-A- 4 825 375

## Description

La présente invention concerne un procédé pour réduire les charges aérodynamiques subies par les gouvernes de profondeur d'un aéronef lors d'un décollage.

On sait que certains aéronefs comportent un empennage horizontal stabilisateur, réglable en inclinaison. Un tel empennage horizontal réglable est, dans la technique, désigné par l'une ou l'autre des abréviations PHR (pour Plan Horizontal Réglable) ou THS (pour Trimmable Horizontal Stabiliser). Tout comme un empennage horizontal fixe, un empennage horizontal réglable est pourvu de gouvernes de profondeur formant le bord de fuite dudit empennage horizontal réglable.

Un empennage horizontal réglable peut être braqué dans le sens à cabrer ou à piquer et il est utilisé dans certaines phases de vol, cf. US 4 825 375. Par exemple, lors du décollage de l'aéronef, il est usuel de braquer ledit empennage horizontal réglable par action du pilote ou d'un système automatique, lesdites gouvernes de profondeur étant dans le prolongement aérodynamique dudit empennage et la valeur de l'angle de braquage de l'empennage horizontal réglable dépendant de plusieurs paramètres de l'aéronef, tels que la position longitudinale du centre de gravité, la masse totale au décollage, la configuration des becs de bord d'attaque et des volets de bord de fuite, la poussée, la vitesse au moment de la rotation élévatrice à la fin du roulage au sol, etc ...

Cette valeur de l'angle de braquage est importante car elle conditionne le comportement de l'avion pendant la phase de rotation, qui commence lorsque le pilote tire sur le manche pour actionner dans le sens à cabrer lesdites gouvernes de profondeur et qui finit lorsque l'assiette de l'aéronef s'est stabilisée autour d'une valeur prédéterminée, par exemple égale à 15°. Si la valeur de cet angle de braquage est trop élevée, il peut s'ensuivre un décollage spontané sans intervention du pilote ou un toucher de queue ou bien, au contraire, si elle est trop faible, un décollage laborieux pénalisant les performances de l'aéronef.

En règle générale, au décollage, la valeur de l'angle de braquage de l'empennage horizontal réglable correspond au cabrage, ce qui est notamment le cas lorsque le centre de gravité de l'aéronef occupe une position longitudinale avancée : en effet, dans ce cas, l'aéronef est difficile à faire tourner au moment de la rotation et l'empennage horizontal réglable doit créer un moment cabreur élevé. Cependant, lorsque le centre de gravité de l'aéronef est en position longitudinale arrière, l'aéronef a tendance à tourner très facilement et l'empennage horizontal réglable ne doit créer qu'un faible moment de tangage, qui peut être cabreur, mais exceptionnellement piqueur.

Au moment de la rotation, les gouvernes de profondeur attachées à l'empennage horizontal réglable sont commandées par le pilote de l'aéronef pour prendre, à partir de leur position dans le prolongement aérodynamique dudit empennage, une position dans le sens à cabrer ledit aéronef qui correspond à une fraction importante (par exemple 2/3) du débattement à cabrer total desdites gouvernes.

On remarquera que, notamment dans le cas où la masse, et donc la vitesse de rotation, de l'aéronef sont élevées, les charges aérodynamiques appliquées aux gouvernes de profondeur sont élevées. Il en résulte que ces gouvernes peuvent être saturées, de sorte que le décollage est plus lent et que l'aéronef ne réagit pas à une traction supplémentaire du pilote sur le manche pour accélérer le décollage en vue, par exemple, d'éviter un obstacle sur la piste de décollage.

Bien entendu, pour résoudre un tel problème, on pourrait penser à augmenter la puissance du système d'actionnement desdites gouvernes de profondeur et/ou la surface des dernières. Mais alors, il en résulterait une augmentation des masses et des coûts pour l'aéronef.

La présente invention a pour objet de remédier à ces inconvénients.

A cette fin, selon l'invention, le procédé pour réduire les charges aérodynamiques subies par les gouvernes de profondeur d'un aéronef lors de la rotation de décollage, ledit aéronef comportant un empennage horizontal réglable auquel sont articulées lesdites gouvernes de profondeur et qui est braqué d'un angle d'inclinaison de valeur prédéterminée en vue de la rotation, est remarquable en ce que, préalablement au déploiement desdites gouvernes de profondeur pour la rotation :
- on braque ledit empennage horizontal réglable, dans le sens à cabrer, avec une valeur effective d'angle d'inclinaison supérieure à une valeur correspondant à une configuration usuelle dans laquelle lesdites gouvernes de profondeur se trouvent dans le prolongement aérodynamique dudit empennage horizontal réglable ; et
- on braque lesdites gouvernes de profondeur dans le sens à piquer, de façon que la combinaison de l'action à cabrer dudit empennage horizontal réglable et de l'action à piquer desdites gouvernes de profondeur engendre une force aérodynamique résultante à cabrer qui est au moins approximativement égale à celle engendrée par l'ensemble dudit empennage horizontale réglable et desdites gouvernes de profondeur dans ladite configuration usuelle.

Ainsi, grâce à la présente invention, pour une action aérodynamique précédant la rotation équivalente à celle usuellement obtenue, on décale vers les valeurs à piquer la position des gouvernes de profondeur à partir de laquelle s'effectuera le braquage de celles-ci au moment de la rotation. Par suite, la course de braquage à cabrer desdites gouvernes de profondeur par rapport audit empennage horizontal réglable est réduite, ce qui, bien entendu, entraîne une diminution des charges appliquées sur lesdites gouvernes de profondeur au moment de la rotation.

De préférence, la différence d'angle d'inclinaison dudit empennage horizontal réglable entre ladite valeur effective et ladite valeur correspondant à la configuration usuelle est choisie pour entraîner une amplitude du braquage à piquer desdites gouvernes de profondeur égale au plus à la moitié, et de préférence au plus au quart, du débattement angulaire total desdites gouvernes de profondeur pour l'obtention de la rotation.

Des expériences et des calculs ont montré que, pour l'avion gros porteur AIRBUS A380 dont le débattement à cabrer total des gouvernes de profondeur utilisé pour la rotation est de l'ordre de 20°, une augmentation de 2,5° de l'angle d'inclinaison de l'empennage horizontal réglable, par rapport à ladite configuration usuelle, entraînait un décalage de 5° dans le sens à piquer des gouvernes de profondeur et une réduction de 20% des charges aérodynamiques appliquées à ces dernières pendant la rotation.

Les figures du dessin annexé feront bien comprendre comment l'invention peut être réalisée. Sur ces figures, des références identiques désignent des éléments semblables.

La figure 1 montre, en perspective schématique, un aéronef civil gros porteur pourvu d'un empennage horizontal réglable.

La figure 2 illustre schématiquement, en trois positions successives, la phase de décollage dudit aéronef incluant la rotation.

Les figures 3A et 3B montrent schématiquement le positionnement usuel de l'empennage horizontal réglable et des gouvernes de profondeur qui y sont attachées, respectivement avant et à partir de la rotation de décollage.

Les figures 4A et 4B montrent schématiquement un exemple de positionnement, conforme à l'invention, de l'empennage horizontal réglable et des gouvernes de profondeur, respectivement avant et à partir de la rotation de décollage.

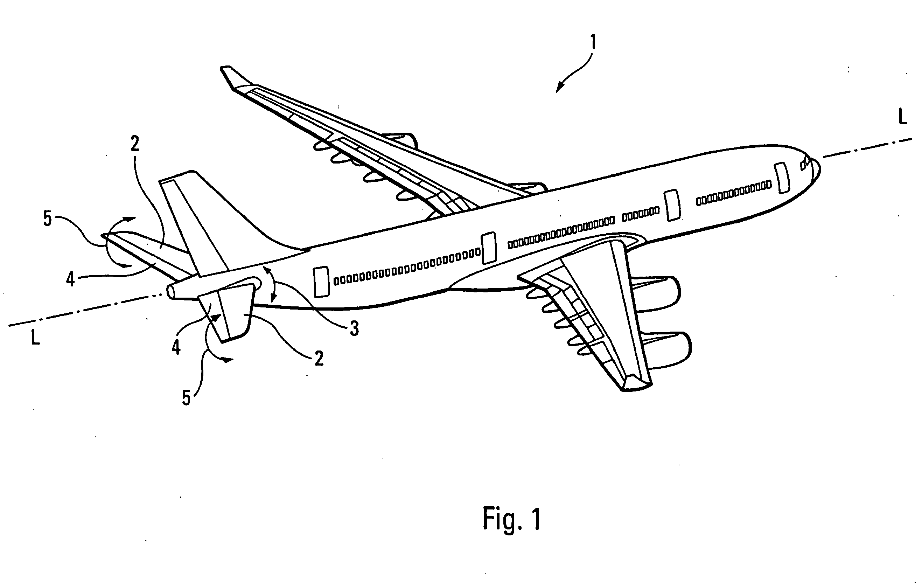

L'avion gros porteur 1, montré schématiquement par la figure 1, présente un axe longitudinal L-L et comporte un empennage horizontal 2 réglable en inclinaison, comme cela est illustré par la double flèche 3. Au bord arrière dudit empennage horizontal réglable 2, sont articulées des gouvernes de profondeur 4 pouvant tourner par rapport audit empennage 2, comme cela est illustré par les doubles flèches 5.

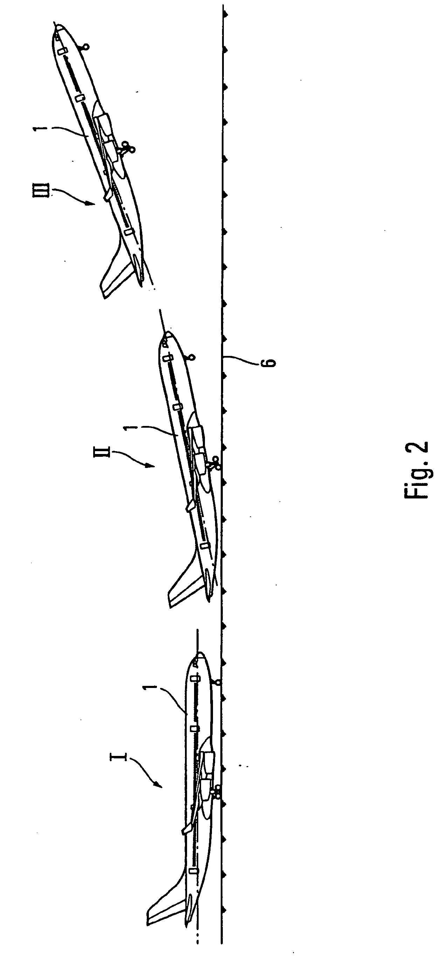

Sur la figure 2, on a illustré trois situations I, II et III que connaît ledit avion 1 lors de son envol.

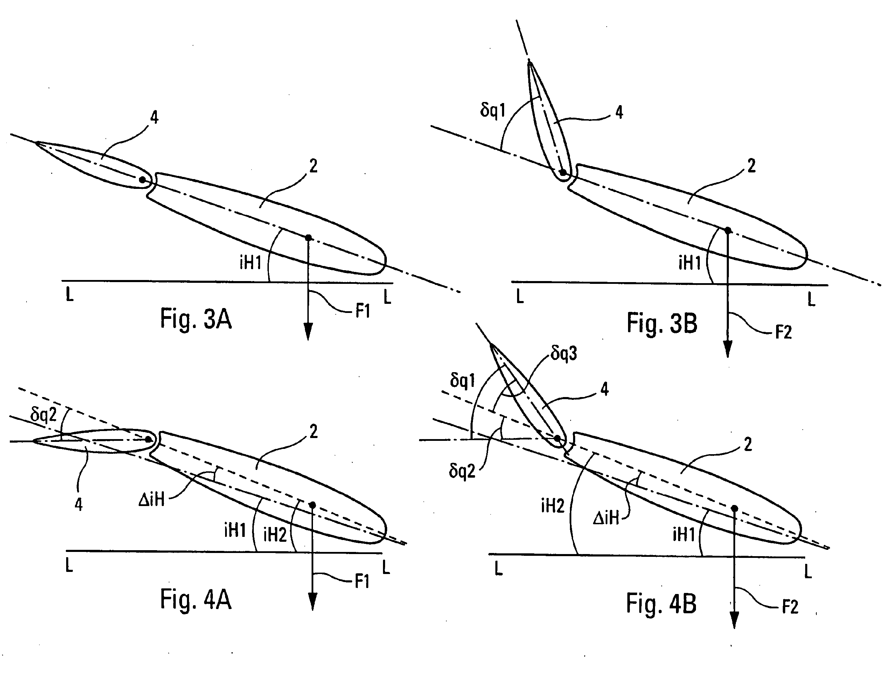

Dans la situation I, l'avion roule sur le sol 6 en accélérant pour atteindre sa vitesse de rotation VR. Pendant cette phase de roulage, dans la technique usuelle (voir la figure 3A), l'empennage horizontal réglable 2 est incliné, par exemple à cabrer, d'un angle iH1 par rapport audit axe longitudinal L-L et les gouvernes de profondeur 4 sont dans une position prolongeant aérodynamiquement ledit empennage horizontal réglable 2. Dans cette configuration usuelle, l'ensemble dudit empennage horizontal réglable 2 et des gouvernes de profondeur 4 engendre une force aérodynamique à cabrer F1 produisant un moment de tangage à cabrer M1 pour l'avion 1.

Toujours de façon usuelle, lorsque l'avion 1 atteint en roulant sur le sol la vitesse de rotation VR (situation II sur la figure 2), le pilote actionne les gouvernes de profondeur 4 pour leur faire prendre une position à cabrer, définie par un angle de débattement δq1 par rapport à l'empennage horizontal réglable 2 (voir la figure 3B). L'ensemble dudit empennage horizontal réglable 2 et des gouvernes 4 engendre alors une force aérodynamique à cabrer F2, supérieure à F1, produisant un moment de tangage à cabrer M2, supérieur à M1.

Après envol de l'avion 1 et stabilisation de celui-ci sur une trajectoire inclinée (situation III sur la figure 2), l'empennage horizontal réglable 2 est ramené parallèlement à l'axe L-L, avec les gouvernes de profondeur 4 en prolongement aérodynamique dudit empennage 2.

Comme mentionné ci-dessus, surtout si la masse de l'avion 1 et sa vitesse de rotation VR sont élevées, des charges aérodynamiques importantes sont appliquées sur les gouvernes de profondeur 4 lorsqu'elles passent de leur position de la figure 3A à leur position de déploiement de la figure 3B, ce qui peut conduire à la saturation desdites gouvernes.

Pour remédier à cet inconvénient, la présente invention opère de la façon illustrée sur les figures 4A et 4B, à savoir :
- pendant le roulage illustré par la situation I de la figure 2, l'empennage horizontal réglable 2 est incliné d'un angle à cabrer iH2, supérieur à l'angle iH1 d'une quantité ΔiH, et
- simultanément, les gouvernes de profondeur 4 sont braquées en sens inverse de l'empennage horizontal réglable 2, c'est-à-dire dans le sens à piquer, pour prendre un angle à piquer δq2 par rapport audit empennage 2.

Dans ce processus, illustré par la figure 4A, les angles iH1 et δq2 sont choisis pour que la force aérodynamique à cabrer engendrée par la combinaison de l'empennage horizontal réglable 2 et des gouvernes de profondeur 4 soit égale à la force aérodynamique F1 de la configuration usuelle montrée par la figure 3A.

Ainsi, lorsque, pour l'obtention de la rotation, les gouvernes de profondeur 4 sont braquées à cabrer du débattement angulaire δq1 afin d'engendrer la force aérodynamique à cabrer F2 (voir la figure 4B), la partie initiale d'amplitude δq2 de ce braquage s'effectue sans contrainte pour lesdites gouvernes de profondeur 4. De plus, par rapport à l'empennage horizontal réglable, lesdites gouvernes de profondeur 4 ne subissent qu'un braquage maximal δq3 égal à la différence δq1-δq2.

Il en résulte que, dans la configuration conforme à la présente invention illustrée par les figures 4A et 4B, les gouvernes de profondeur 4 subissent, lors de la rotation, des charges aérodynamiques inférieures à celles auxquelles elles sont soumises dans la configuration usuelle des figures 3A et 3B.

A titre d'exemple non limitatif, on donne ci-après quelques exemples de valeurs, appropriées à l'avion AIRBUS A380, pour certains des angles mentionnés ci-dessus :

| | | | |
|---|---|---|---|
| ΔiH = 2,5° | δq1 = 20° | δq2 = 5° | δq3 = 15°. |

## Revendications

1. Procédé pour réduire les charges aérodynamiques subies par les gouvernes de profondeur (4) d'un aéronef (1) lors de la rotation de décollage, ledit aéronef (1) comportant un empennage horizontal réglable (2) auquel sont articulées lesdites gouvernes de profondeur (4) et qui est braqué d'un angle d'inclinaison de valeur prédéterminée en vue de la rotation, **caractérisé en ce que**, préalablement au déploiement desdites gouvernes de profondeur (4) pour la rotation :
- on braque ledit empennage horizontal réglable (2), dans le sens à cabrer, avec une valeur effective (iH2) d'angle d'inclinaison supérieure à une valeur (iH1) correspondant à une configuration usuelle dans laquelle lesdites gouvernes de profondeur (4) se trouvent dans le prolongement aérodynamique dudit empennage horizontal réglable (2) ; et
- on braque lesdites gouvernes de profondeur (4) dans le sens à piquer, de façon que la combinaison de l'action à cabrer dudit empennage horizontal réglable (2) et de l'action à piquer desdites gouvernes de profondeur (4) engendre une force aérodynamique résultante à cabrer qui est au moins approximativement égale à celle (F1) engendrée par l'ensemble dudit empennage horizontale réglable (2) et desdites gouvernes de profondeur (4) dans ladite configuration usuelle.

2. Procédé selon la revendication 1,
**caractérisé en ce que** la différence angulaire (ΔiH) entre ladite valeur effective (iH2) et ladite valeur (iH1) correspondant à ladite configuration usuelle est choisie pour entraîner une amplitude (δq2) du braquage à piquer desdites gouvernes de profondeur (4) au plus égale à la moitié du débattement angulaire total (δq1) desdites gouvernes de profondeur (4) par rapport audit empennage horizontal réglable (2) pour l'obtention de la rotation.

3. Procédé selon la revendication 2,
**caractérisé en ce que** ladite amplitude du braquage à piquer (δq2) desdites gouvernes de profondeur (4) est au plus égale au quart dudit débattement angulaire total (δq1).

## Claims

1. A process for reducing the aerodynamic loads undergone by the elevators (4) of an aircraft (1) during takeoff rotation, said aircraft (1) comprising an adjustable horizontal tailplane (2) to which said elevators (4) are hinged and which is deflected by an angle of inclination of predetermined value with a view to the rotation,
**characterized in that** prior to the deployment of said elevators (4) for the rotation:
- said adjustable horizontal tailplane (2) is deflected, in the nose-up direction, with a greater actual value (iH2) of angle of inclination than a value (iH1) corresponding to a customary configuration in which said elevators (4) are in direct aerodynamic alignment with said adjustable horizontal tailplane (2); and
- said elevators (4) are deflected in the nose-down direction, in such a way that the combination of the nose-up action of said adjustable horizontal tailplane (2) and of the nose-down action of said elevators (4) engenders a nose-up resultant aerodynamic force which is at least approximately equal to that (F1) engendered by the assembly of said adjustable horizontal tailplane (2) and of said elevators (4) in said customary configuration.

2. The process as claimed in claim 1,
**characterized in that** the angular difference (ΔiH) between said actual value (iH2) and said value (iH1) corresponding to said customary configuration is chosen so as to bring about an amplitude (δq2) of the nose-down deflection of said elevators (4) at most equal to half the total angular swing (δq1) of said elevators (4) with respect to said adjustable horizontal tailplane (2) for the obtaining of the rotation.

3. The process as claimed in claim 2,
**characterized in that** said amplitude of the nose-down deflection (δq2) of said elevators (4) is at most equal to a quarter of said total angular swing (δq1).

## Patentansprüche

1. Verfahren zum Verringern der aerodynamischen Kräfte, denen die Höhenruder (4) eines Flugzeugs (1) bei der Drehung beim Abheben ausgesetzt ist, wobei das Flugzeug ein regelbares Seitenleitwerk (2) umfasst, an welchem die Höhenruder (4) angelenkt sind, und das um einen Neigungswinkel von vorbestimmtem Wert im Hinblick auf die Drehung schwenkbar ist,
**dadurch gekennzeichnet, dass** vor dem Ausstellen der Höhenruder (4) für die Drehung:
- das regelbare Seitenleitwerk (2) mit einem Sollwert (iH2) eines Neigungswinkels, der größer ist als ein Wert (iH1), der einer üblichen Konfiguration entspricht, in welcher sich die Höhenruder (4) in der aerodynamischen Verlängerung des regelbaren Seitenleitwerks (2) befinden, in Hochziehrichtung geschwenkt wird; und
- die Höhenruder (4) in Tauchrichtung geschwenkt werden, derart, dass die Kombination aus der Hochziehwirkung des regelbaren Seitenleitwerks (2) und der Tauchwirkung der Höhenruder (4), eine resultierende aerodynamische Hochziehkraft erzeugt, die wenigstens in etwa gleich derjenigen (F1) ist, die durch die Gesamtheit aus regelbarem Seitenleitwerk (2) und Höhenruder (4) in der üblichen Konfiguration erzeugt wird.

2. Verfahren nach Anspruch 1,
**dadurch gekennzeichnet, dass** die Winkeldifferenz (ΔiH) zwischen dem Sollwert (iH2) und dem Wert (iH1) entsprechend der üblichen Konfiguration so gewählt wird, dass eine Ausschlagweite (δq2) der Tauchschwenkung der Höhenruder (4) von höchstens gleich der Hälfte des gesamten Ausschlagwinkels (δq1) der Höhenruder (4) gegenüber dem regelbaren Seitenleitwerk (2) für das Erhalten der Drehung erfolgt.

3. Verfahren nach Anspruch 2
**dadurch gekennzeichnet, dass** die Ausstellweite der Tauchschwenkung (δq2) der Höhenruder (4) höchstens gleich einem Viertel des gesamten Winkelausschlags (δq1) beträgt.
